# EUROPEAN PATENT APPLICATION

(11) **EP 0 992 960 A2**
(43) Date of publication of application: **12.04.2000**
(21) Application number: 99306615.8
(22) Date of filing: 20.08.1999
(51) Int. Cl.: G07F 19/00, G06F 17/60

(54) **Transfer system, method, and recording medium therefor**

(30) Priority: 06.10.1998 JP 28448198
(71) Applicant: THE SUMITOMO BANK, LIMITED, Chiyoda-ku, Tokyo (JP)
(72) Inventor: Bando, Toshiro, c/o The Sumitomo Bank, Limited, Chiyoda-ku, Tokyo (JP)
(74) Representative: Brown, Kenneth Richard

(57) **Abstract**

It is checked by searching a table whether or not a transferred-to account number is a transfer-exclusive account number. If it is determined as a result of the table search that the transferred-to account number is not a transfer-exclusive account number (NO in S302), then a common ledger receiving process is performed (S308). If it is a transfer-exclusive account number, then a transferred-to account number or related information is added to a predetermined column (S304). A transferred-to account umber is converted into a normal account number (S306). Then, a common ledger receiving process is performed (S308) on the obtained normal account number. Afterwards, a transfer notification is issued to the company to which money has been transferred using a feedback listing (S314) and electronic information (S312) in an EB service. In this process, a transfer-exclusive account number for each payer or related information is written to a predetermined column, and output as a notification. An enterprise which has set transfer-exclusive account numbers can specify a payer by an account number, etc. used in the transferring process.

## Description

The present invention relates to a transfer system for transferring money from an ATM (automatic teller machine), etc. in a bank, and more specifically to a transfer system in which a payer can be designated.

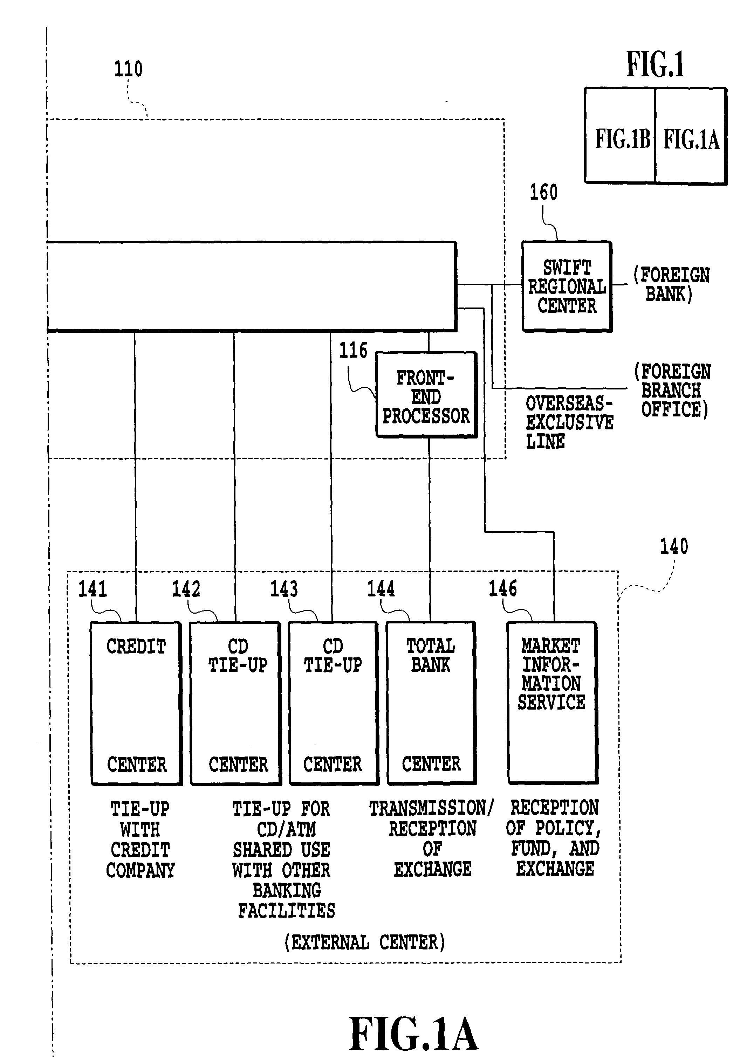

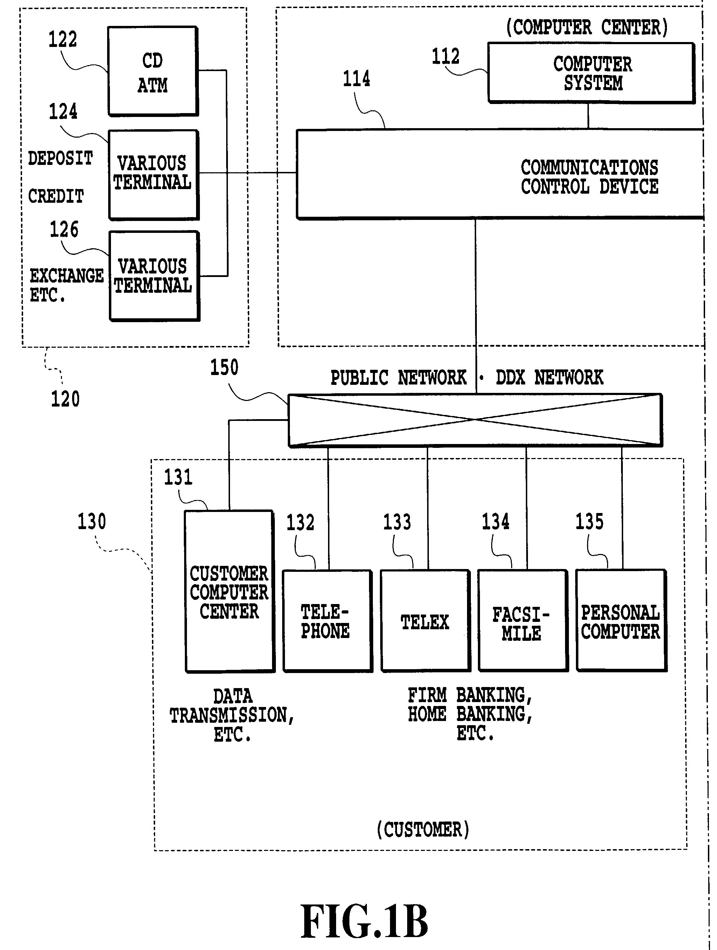

Figs. 1A and 1B shows a current bank system using a computer. A computer system 112 in a computer center 110 is connected to a branch office system 120 provided in each branch office, etc., a customer system 130, an external banking facility center 140, a SWIFT regional center, etc. through a communications control device 114. The computer system 112 controls processes of the central ledger, etc. of the bank.

Thus, since the above described interconnected banking systems are common these days, it is popular to use the bank system shown in Figs. 1A and 1B when a payment is made for a transaction, etc. by transferring money into the bank account of a payee.

Particularly, with the spread of terminal units such as ATMs, etc., it has become common to make a payment through these machines. In this case, when a large number of payers are going to transfer money to a company, it is not easy to specify a payer who has made a payment through the transfer.

For example, if a payer transfers money using a cash card from an ATM, and the name of an account does not match the name of a person to be charged, then a re-entry of a name is required. Without the re-entry, the person to be charged can be regarded as different from the payer.

Lately, in Japan, the name of a payer who transfers money into a payee's account between banks is displayed in Katakana of Japanese. Therefore, when a person is designated by the name, there are too many same names to be correctly specified.

In addition, a payer code, etc. can be assigned for use in normally inputting the payer's name. However, payers often forget their own payer's codes, etc. or mistakenly input them, and it is hard for all users to perfectly input their codes.

It is an object of the invention to provide a transfer system, a method, and a recording medium therefor to correctly designate a payer who transfers money into a payee's account without an excessive transfer effort.

The present invention provides a transfer system in a bank system for transferring money using a plurality of related accounts to payers,
characterized in comprising:
a unit for performing a receiving process on a specified account to collectively receive money transferred into a plurality of related accounts;
an output unit for outputting transfer information for the related account by adding to it account related information about an account related to a payer and/or a number specifying the related account; and
a unit storing the outputted transfer information as the transfer information about the specified account.

According to the invention, the transfer system may be characterized in that said unit performing the receiving process for receiving money comprises:
a unit for detecting whether or not an account into which money has been transferred is a related account which is related to the payer;
a unit for associating, if it is detected that the account into which money has been transferred is the related account which is related to the payer, the related account with the specified account; and
a unit for performing the receiving process on the specified account.

According to the invention, the transfer system may be characterized in that said unit associating a related account with a specified account replaces a number of the related account with a number of the specified account.

According to the invention, the transfer system may be characterized in that
said specified account is a parent account of the related account.

According to the invention, the transfer system may be characterized in that the receiving process on the specified account can be performed without performing a receiving process on the related account.

According to the invention, the transfer system may be characterized in that the receiving process on the related account can be performed on the specified account after performing a receiving process.

According to the invention, the transfer system may be characterized in that the receiving process on the specified account can be collectively performed at least.

According to the invention, the transfer system may be characterized in that said unit for performing a process for receiving money on the specified account performs a process for receiving money on the specified account independently after completing the process for transferring money into the related account.

According to the invention, the transfer system may be characterized in that said unit for storing the transfer information as transfer information about the specified account stores the transfer information in a file only for use in managing information.

According to the invention, the transfer system may be characterized in that after performing a process for collecting transfer information into each of the specified accounts, said file can be updated according to collected transfer information.

Since a payer can be specified by an account number, etc. according to the present invention, the payer can be correctly specified without a charge for the payer. Furthermore, the transfer information can be collectively managed corresponding to the payee. Additionally, transferred money can be collectively managed. Therefore, a great benefit can be enjoyed in managing a fund.
Fig. 1 is a diagram showing the relationship of Figs. 1A and 1B;
Figs. 1A and 1B are block diagrams for showing the configuration of the current bank system;
Fig. 2 shows a process for telling a transfer-exclusive account number exclusive for transfer;
Fig. 3 is a flowchart of the transferring process performed in the center according to a first embodiment of the present invention;
Figs. 4A and 4B show the configurations of the tables used in a transferring process;
Fig. 5 shows the relationship among a series of processes;
Fig. 6 is a diagram for explanation of a second embodiment of the present invention;
Fig. 7 is a flowchart of the transferring process according to the second embodiment of the present invention;
Figs. 8A and 8B show the configurations of the tables used in the transferring process according to the second embodiment of the present invention;
Fig. 9 is a flowchart of the transferring process according to a third embodiment of the present invention;
Fig. 10 is a flowchart of the transferring process according to a fourth embodiment of the present invention;
Fig. 11 is a flowchart of the transferring process according to a fifth embodiment of the present invention;
Fig. 12 shows the structure of the file of the account ledger used in the transferring process according to a sixth embodiment of the present invention;
Fig. 13 is a flowchart of the transferring process according to the sixth embodiment of the present invention; and
Fig. 14 is a flowchart of another transferring process according to the sixth embodiment of the present invention.

The present invention can be realized by various embodiments. The characteristic configuration of the present invention will be described below in detail.

The present invention specifies a payer who transfers money into a payee's account by a number specifying an account related to the payer. Therefore, the transferring process is performed as follows according to the present invention.
(1) A plurality of accounts related to a payer are listed.
(2) The money transferred into the accounts is transferred into a collective account for the payee.
(3) The transfer information for each account is collected as the transfer information about a collective account.
(4) When the transfer information about the collective account is collected, the number, etc. specifying the account related to the payer is included as a part of the transfer information.

Thus, by performing the transferring process, not only the payer can be specified by the number, etc. specifying the account into which money has been transferred, but also money can be collected in the specified account of the payee, thereby collectively managing a fund. In addition, since the transfer information is also collected, the payment information about when and by whom money has been transferred can be collectively managed.

The above described present invention will be practically described below in detail for each embodiment by referring to the attached drawings. The embodiments of the present invention can be processed in the bank system as shown in Figs. 1A and 1B.

### (Embodiment 1)

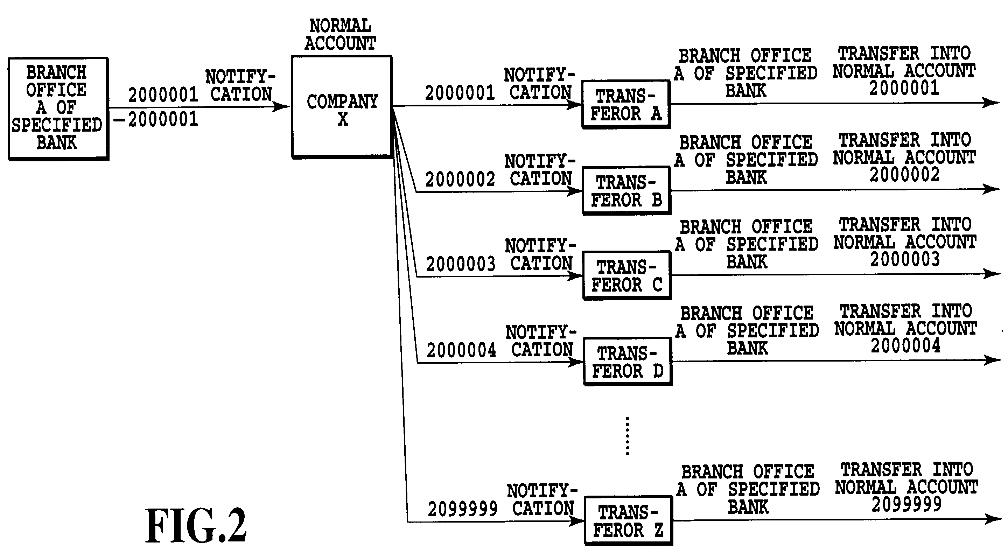

The embodiments of the present invention will be described below by referring to Figs. 2 through 4.

For a company X having an account (account number 1234567) in the branch office A of a bank, account numbers (for example. 2000001 through 2099999) are set as transfer-exclusive accounts of the company X corresponding to an expected number of payers who will transfer money into the account of the company X. The company X is notified of the account numbers. The transfer-exclusive account numbers set for the company X are not used in opening normal accounts.

The company X notified of the transfer-exclusive account numbers appropriately assigns each of them to an expected payer (for example, transferors (payers who will transfer money into the account of a transferee) A through Z). Then, the company X notifies an expected transferor of his or her transfer-exclusive account number. The notification can be issued by preparing a bill, etc. with the transfer-exclusive account number.

The transferor transfers money into the account assigned to the transferor in the branch office A of the bank through an ATM terminal 122 in another branch office of the bank or an ATM terminal of other specified banking facilities, etc. as shown in Figs. 1A and 1B. The number of the account is notified by a bill, etc.

The transfer can be made not only through the above described ATM terminals, but also through electronic banking using a magnetic tape, the personal computer shown in Figs. 1A and 1B, etc., telephone banking, etc.

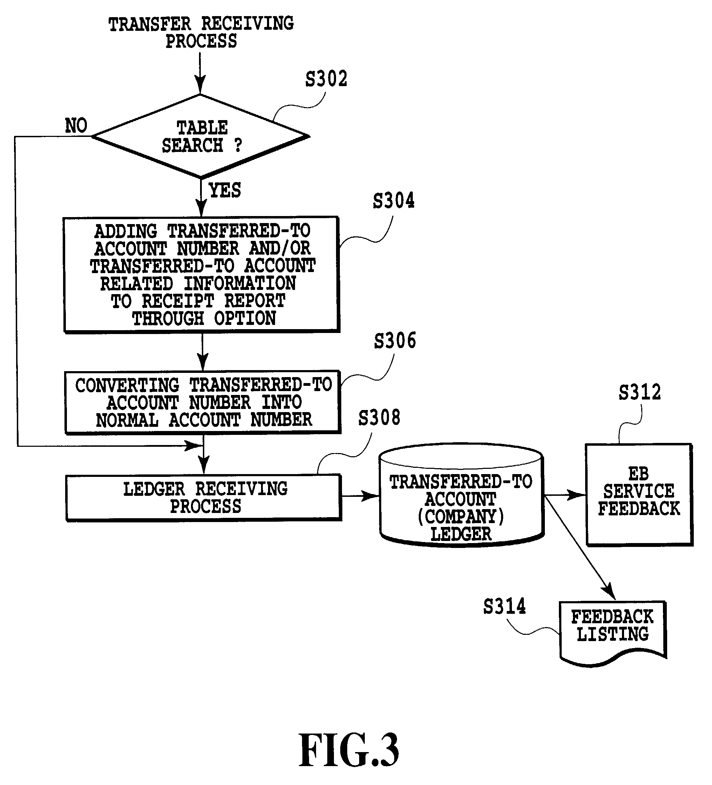

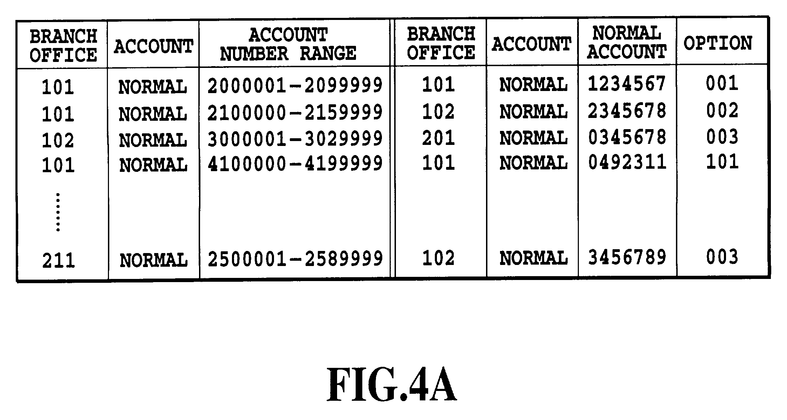

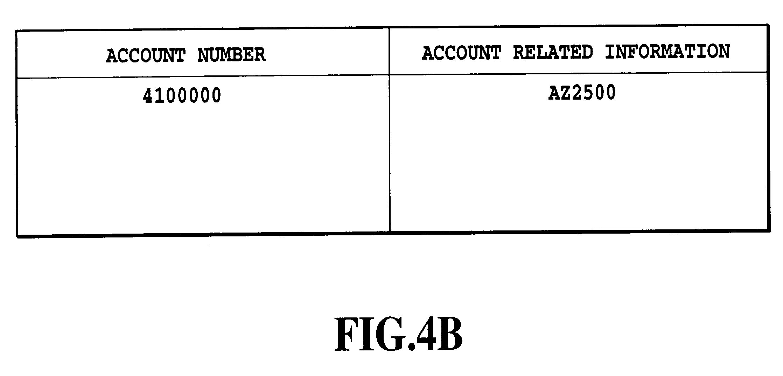

The receiving process by the computer system 112 of the computer center 110 of the bank in which the account of the company X, the transferee, is open is described below by referring to the flowchart in Fig. 3 and Figs. 4A and 4B. The program shown in Fig. 3 is stored in a recording medium such as a hard disk, etc. The program can be installed into the hard disk from a portable recording medium such as CD-ROM.

Fig. 3 shows a process of a portion of the receiving process related to the present embodiment. In the transfer receiving process shown in Fig. 3, it is first checked in a table searching process whether or not the number of the account into which money has been transferred is a transfer-exclusive account number (5302). An example of the table is shown in Fig. 4A.

As shown in Fig. 4A, the table used in the above described table searching process is a correspondence table between transfer-exclusive account numbers and numbers of collective accounts (normal accounts).

If it is determined that the account is not a transfer-exclusive account number as a result of the table searching process (NO in S302), then a common ledger receiving process is performed (S308). If it is a transfer-exclusive account number, then the transferred-to account number or the information related to the transferred-to account is added to a predetermined column of a receipt report according to the options in the table shown in Fig. 4A (S304).

Options available in this step can be specified by, for example, an option number 001 for adding the transferred-to account number to the head of the name of the transferor, an option number 002 for adding the transferred-to account number to the end of the name of the transferor, an option number 003 for setting the transferred-to account number to a transfer requester code, etc.

By specifying any of the above described options, and by using the table of transferred-to account numbers and related information shown in Fig. 4B, the information (for example a customer number, etc.) related to the transferred-to account can be obtained. The obtained information can be added to a receipt report, or added to a predetermined column of the receipt report instead of the transferred-to account number.

A transferred-to account number is converted into a normal account number for correspondence according to a correspondence table shown in Fig. 4A (S306). Then, a common ledger receiving process is performed (S308) on the obtained normal account number.

Afterwards, a transfer notification is issued to the company to which money has been transferred using a feedback listing (S314) and electronic information (S312) such as a magnetic tape, etc. in an EB (electronic banking) service. In this process, a transfer-exclusive account number for each payer or related information is written to a predetermined column of a transfer receipt report, and output as a notification. Therefore, the company X which has set transfer-exclusive account numbers can specify a payer by an account number, etc. used in the transferring process.

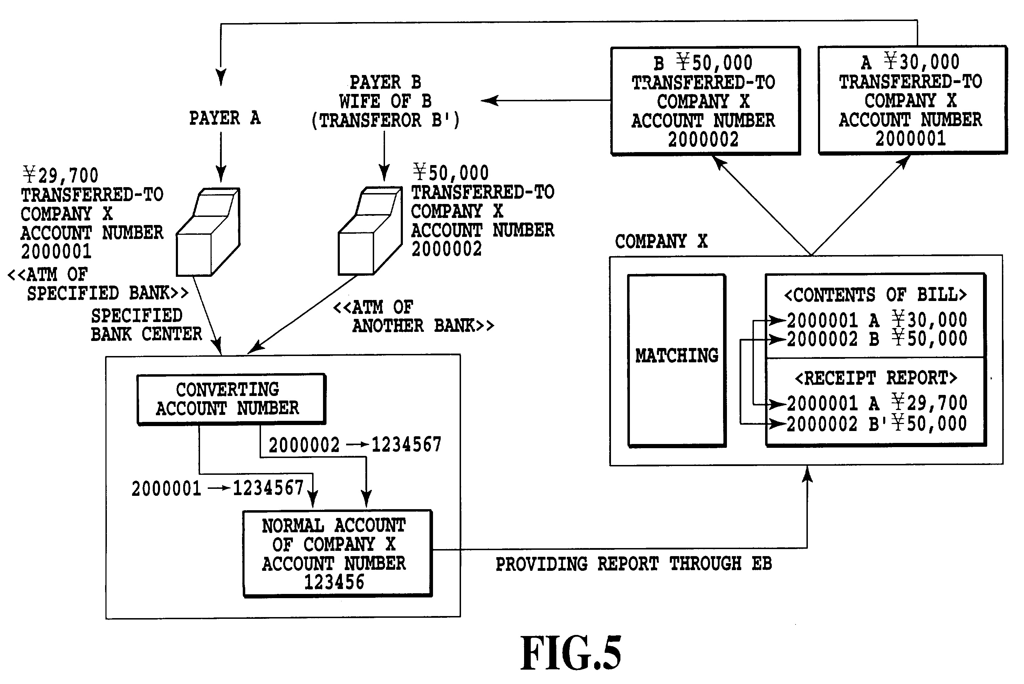

A series of the above described processes is described below by referring to Fig. 5. First, the X company notifies customers A and B of their respective transfer-exclusive account numbers (2000001 and 2000002) as transferred-to account numbers by describing these numbers on the respective bills. Upon receipt of the notification, the customers A and B transfer money by using an ATM into the accounts having the account numbers notified by the company X. In Fig. 5, the payer A transfers \29,700, the amount obtained by subtracting the transfer fee from the billed amount of \30,000, through a branch office of its bank. The payer B transfers money through a transferor B' who is the wife of the payer B using an ATM of one of other banks.

The money transferred from the customers A and B is processed in the computers in the center as shown in Fig. 3, the account numbers are converted into normal account numbers, and a receiving process is performed on the normal collective account of the company X. The transferred-to account number is written to a remark column in the receipt report of the normal collective account of the company X. According to the receipt report received as electronic information in the EB, the company X specifies a payer based on the account number written to the receipt report, and compares it with the contents of the bill.

Thus, a payer can be correctly specified by assigning a transfer-exclusive account number to each payer without charging an excess fee to each payer.

In the above described process, serial numbers are assigned as transfer-exclusive account numbers. However, the numbers are not limited to the serial numbers. For example, available account numbers can be limited using verification values. In addition, a table searching process is performed to detect transfer-exclusive account numbers in the above described process, but it can be replaced with another detecting process.

Although transfer-exclusive account numbers are converted into normal collective account numbers in the above described process, other embodiments can replace the process.

### (Embodiment 2)

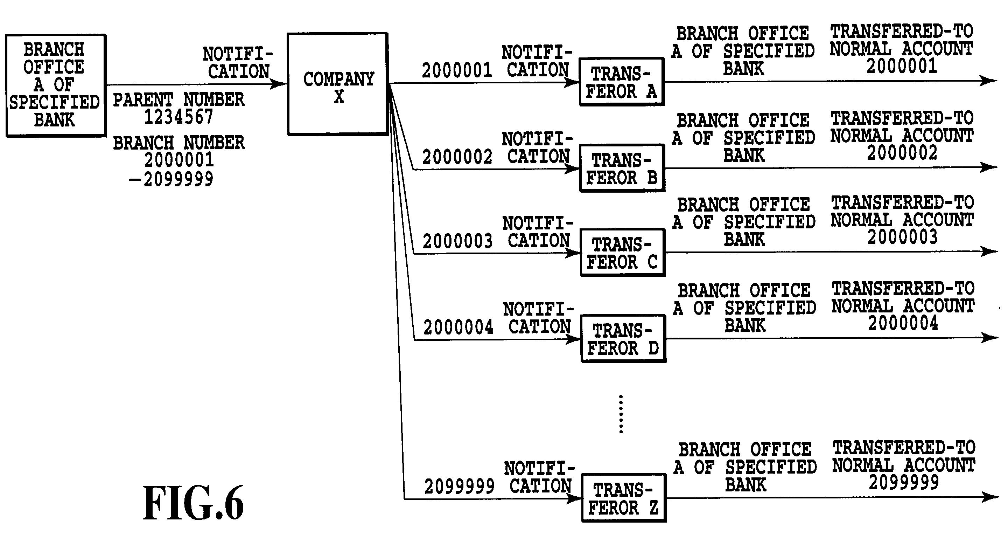

The second embodiment of the present invention is based on the system capable of processing account numbers in a hierarchical structure of a parent account number and its branch account numbers. In this system, account numbers can be represented by their parent account number. A branch account number is assigned to each payer, and used as a transfer-exclusive account number in a receiving process. This process is described in detail by referring to Figs. 6 through 8.

In Fig. 6, branch numbers 2000001 through 2099999 are assigned as transfer-exclusive account numbers to the company X having a parent account number 1234567 in the branch office A of a bank. The company X is notified of the branch account numbers.

The company X notifies the transferors A through Z of respective branch account numbers in the company X. The notification can be made by writing each number as a transferred-to account number to a bill, etc.

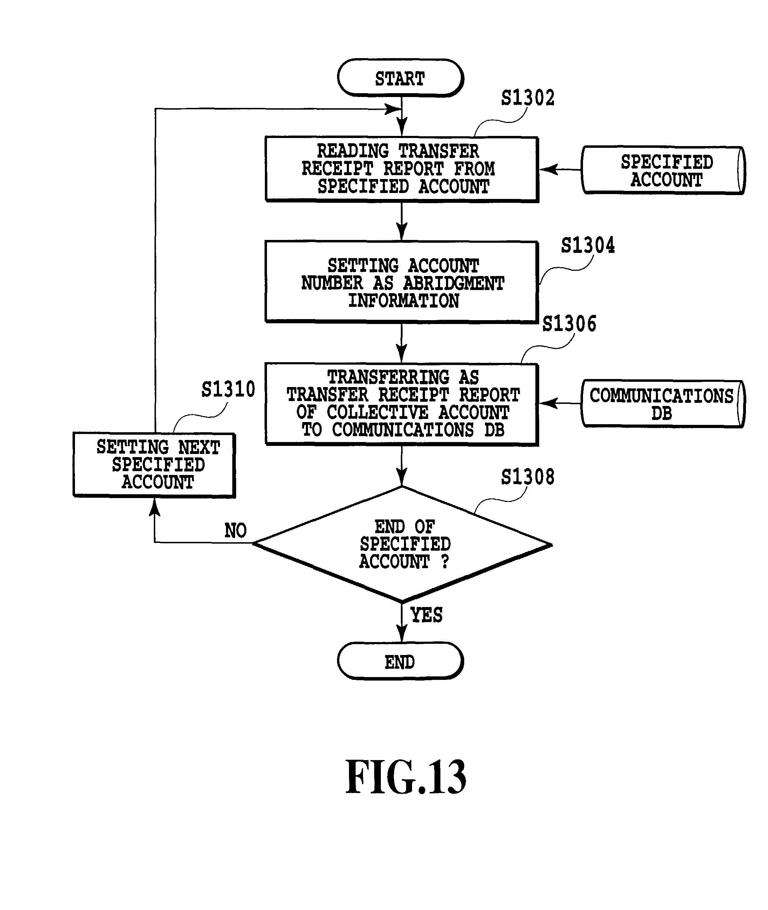

As shown in Figs. 1A and 13, the current bank system is normally connected to other systems through a network. In a network system among banks (for example, the total bank system shown in Figs. 1A and 1B), the number of digits transferable as an account number is normally 7. Therefore, only a branch number can be transferred as an account number. The transferor is notified of his or her branch number only as an account number for transfer.

A transferor transfers money through an ATM, etc. to the company X using the branch number specified as a transferred-to account number as written to a bill, etc.

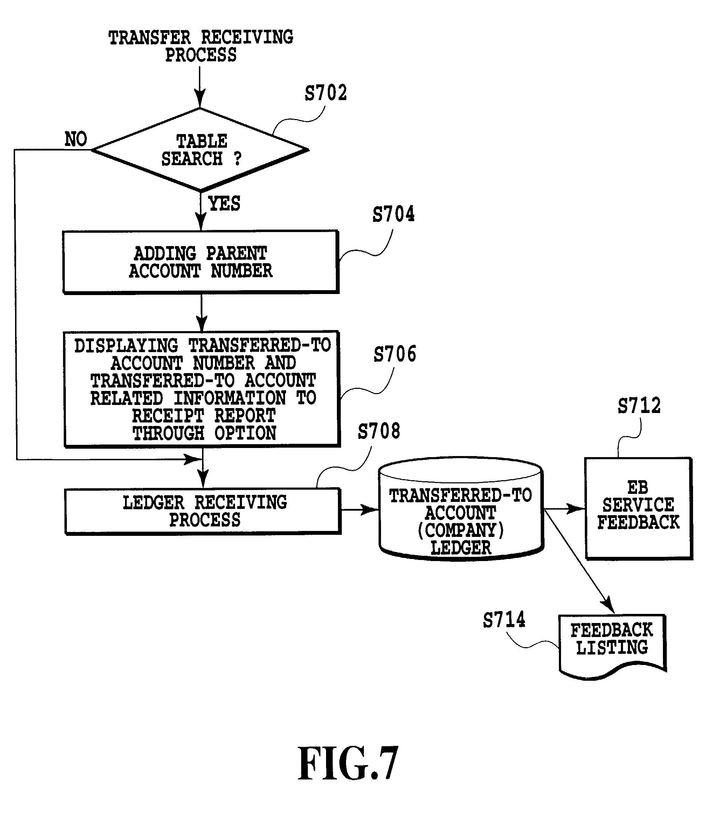

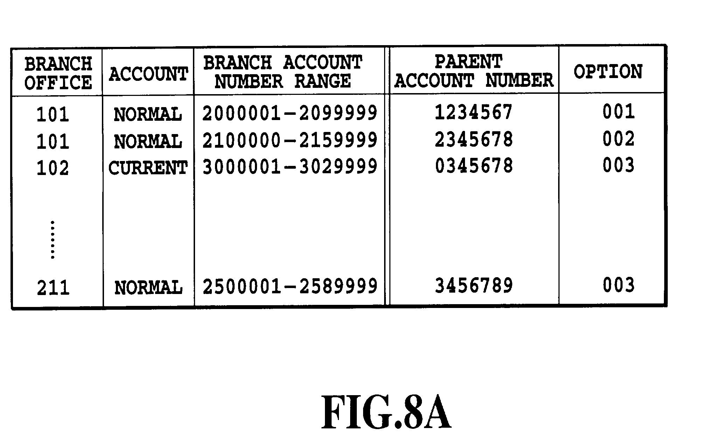

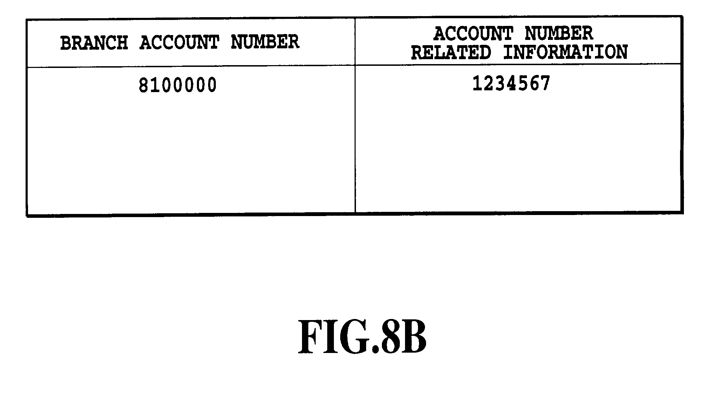

A transfer receiving process performed by the computer at the center of the bank in which the account of the company X is open is described below by referring to the flowchart shown in Fig. 7. In Fig. 7, it is first checked whether or not the account number used in the transferring process is a branch number having a parent number. It can be checked in a table searching process using a correspondence table between the branch numbers and the parent numbers as shown in Fig. 8A (S702). If it is determined that a number is not a branch number (NO in 5702), then a ledger receiving process (S708) is performed using the transfer account number as a parent number. If it is a branch number (YES in S702), then the transfer account number is replaced with a corresponding parent number according to the table. Then, the corresponding parent number is written to the receipt report. According to the options in the tables shown in Figs. 8A and 8B, a process about the display of a branch number is performed.

Options available in this step can be specified by, for example, an option number 001 for adding to the head of an input name of a transferor, an option number 002 for adding to the end of an input name of a transferor, an option number 003 for setting to a transfer requester code, etc.

By specifying any of the above described options, and by using the table of transferred-to account numbers and related information shown in Fig. 8B, the information (for example a customer number, etc.) related to the transferred-to account can be obtained. The obtained information can be added to a receipt report, or added to a predetermined column of the receipt report instead of the transferred-to account number.

Next, a ledger receiving process (S708) is performed using added parent account numbers and branch numbers. A transferred-to account has a parent number and a branch number in a hierarchical structure. The money transferred using a branch number is transferred into an account having each branch number of the parent account number. The branch number corresponds to a payer, and the payer can be specified by a branch number of an account. Therefore, in the electronic banking service, a payer can be specified by a branch number both when transfer information is transmitted as electronic information to the company X (S712) and when it is transmitted as a feedback listing (S714).

In the above described process, serial numbers are assigned as branch account numbers. However, the numbers are not limited to the serial numbers. For example, available account numbers can be limited using verification values. In addition, a table searching process is performed to detect branch account numbers in the above described process, but it can be replaced with another detecting process.

In the above described process, an account number can be transferred by only seven digits in the communications among banks. When an account number can be expressed by the number of digits larger than the number of digits of parent numbers and branch numbers in the communications among banks, the parent number and the branch number can be transmitted as an account number. In this case, it is not necessary to add a parent number by detecting a branch number according to a table, etc. as described above. After detecting whether or not a number is in a hierarchical structure, the hierarchical structure is to be processed. In this case, if the number of digits increases with a branch number, then the number of digits or a character indicating the structure of a parent number and a branch number (for example, a hyphen, etc.) should be checked to detect that an account number having the hierarchical structure of a parent number + a branch number has been received. The subsequent processes are performed as a transferring/receiving process on an account having a parent number according to the hierarchical number structure. By specifying an option, information related to a transferred-to account (for example, a customer number, etc.) can obtained according to a table of transferred-to account numbers and related information shown in Fig. 8B, added to a receipt report, and added to a predetermined column of the receipt report instead of the transferred-to account number.

As described above, a fund and information can be collected in a collective account using a hierarchical account configuration as described above.

### (Embodiment 3)

In the above described first and second embodiments, money is transferred in real time into a normal account and a parent account. However, transfer information can be stored in a temporary file, and then a receiving process can be performed on a normal account and a parent account in a batch process. Thus, the load of the computer process can be reduced.

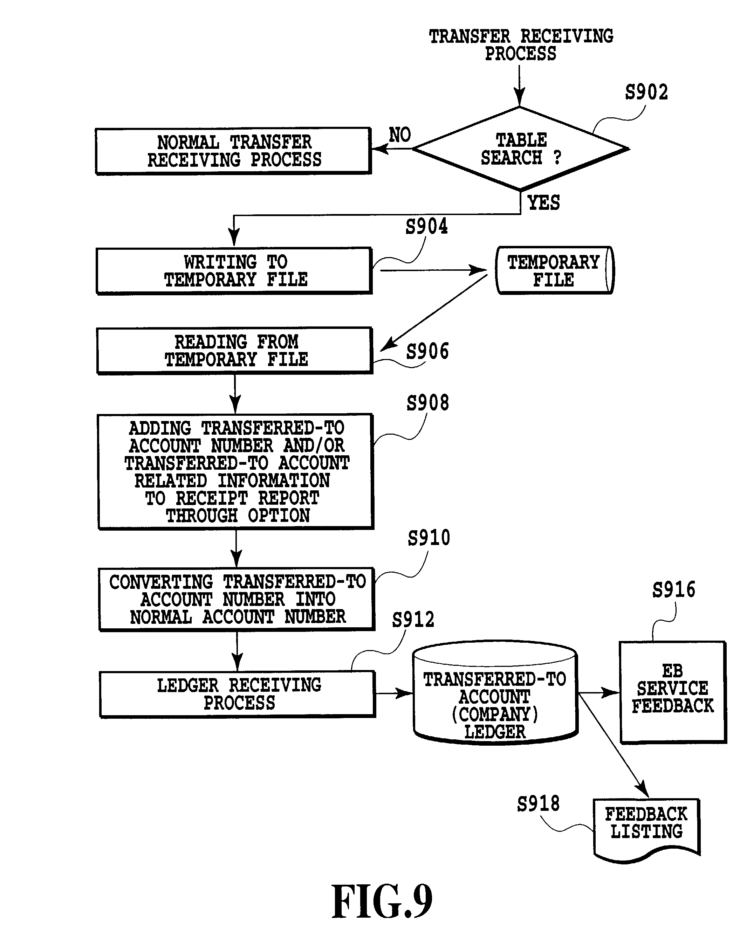

The above described batch process according to the first embodiment of the present invention is described below by referring to Fig. 9. In the transfer receiving process, as in the process (S302) shown in Fig. 3, it is first checked by searching a table whether or not a transferred-to account number is a transfer-exclusive account number (S902). If it is not a transfer-exclusive account number (NO in S902), a normal transfer receiving process is performed. If it is a transfer-exclusive account number (YES in S902), transfer information is written to a temporary file (S904). The subsequent processes are performed in a batch process according to the transfer information written to the temporary file.

The processes (S908 through S918) after reading the transfer information from the temporary file in the batch process (S906) are the same as the processes in S304 through S314 shown in Fig. 3, and therefore omitted here.

By performing the batch process as described above, the receiving process on a normal account can be performed after the daily operations have been completed, or separately performed several times a day.

The batch process can also be applied in the above described second embodiment.

Thus, the receiving process is not performed each time money is transferred, but can be performed once or several times a day. Accordingly, the load of the computer can be reduced.

### (Embodiment 4)

In the above described first through third embodiments a receiving process is not performed on a transferred-to account (transfer-exclusive account). However, a receiving process can be performed on a collective account after performing the receiving process on the transferred-to account. In this case, a transferring process is performed from a transferred-to account to a collective account, and the name of the transferor to the transferred-to account and the transferred-to account number are written to the receipt report to the collective account.

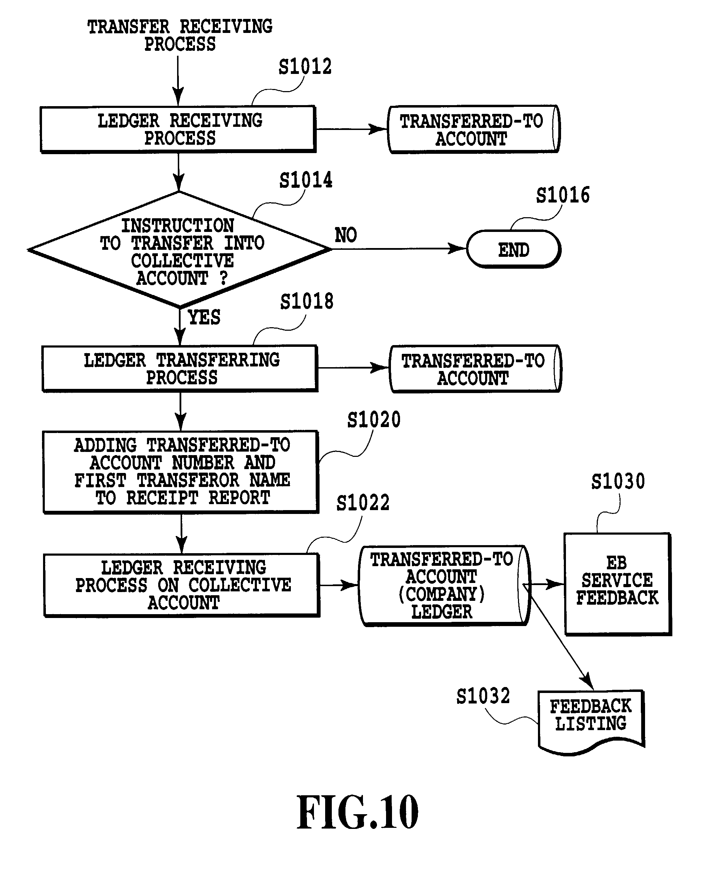

The process is described below in detail by referring to Fig. 10. When a transferring process is performed, a receiving process is performed on an account having a normal transfer account number (S1012). When a transfer from the account to a collective account for the ledger is specified, a ledger receiving process is performed, and then a transferring process is performed (S1018), and then the name of the transferor and the transferred-to account number are added to a receipt report (S1020), thereby performing a receiving process on a collective account (S1022).

The processes after the transferring process to the collective account (in and after S1014) can be performed in a batch process. For example, the load of the computer can be reduced by performing a transferring process on a normal account once or several times a day.

In addition, the above described processes can also be applied to the process of an account having a branch mumber in the second embodiment.

Furthermore, a transferred-to account number can be converted into related information about the transferred-to account according to, for example, a table, as additional information.

A step of a collecting process in the above described embodiments is performed each time money is transferred. However, it is not necessary to perform a step of the collecting process each time money is transferred. The process is described below.

The process of the embodiment described below is designed such that a receiving process is performed on a plurality of accounts prepared corresponding to payers. Therefore, the transferring process performed on the accounts corresponding to the payers is a normal transferring process. Then, a fund of each account is collected in a collective account of a receiver, and transfer information is collectively managed.

### (Embodiment 5)

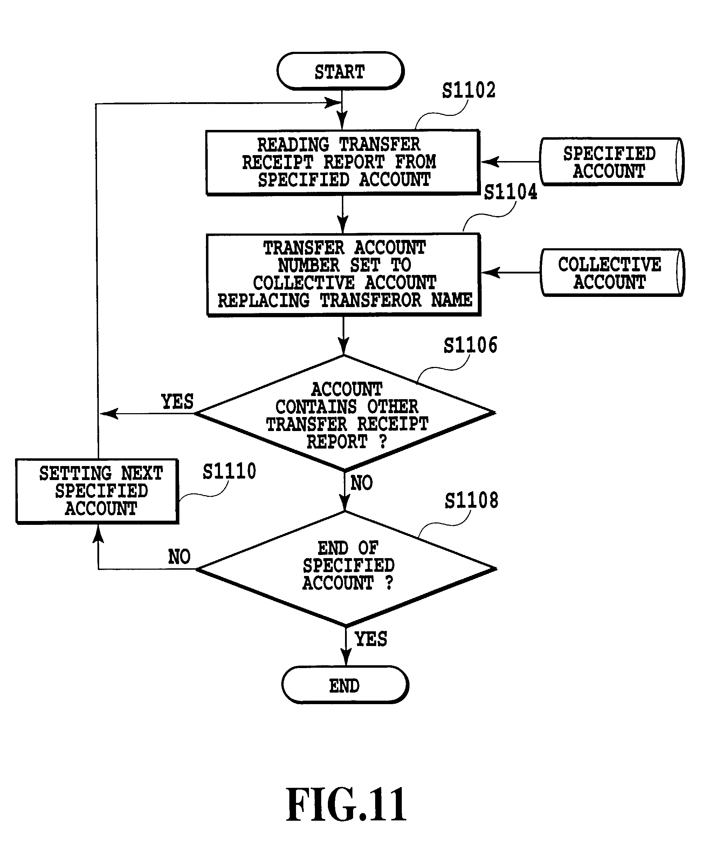

The process according to the fifth embodiment is described below by referring to the flowchart shown in Fig. 11. It is based on an account (specified account) as a collective account corresponding to a payer. A normal transfer receiving process is performed on the account. The transfer information is accumulated in the specified account.

Based on the above described conditions, the process for collecting transferred funds and transfer information in the collective account of a receiver is described below by referring to the flowchart in Fig. 11. The process shown in Fig. 11 is performed by specifying the collective account of the receiver.

In Fig. 11, a transferring process is performed by reading one transfer receipt report from an account specified corresponding to the collective account of the receiver (S1102). The accounts specified corresponding to the collective account are preliminarily provided as, for example, a list for each collective account, and are sequentially processed in the order of the list. The receiving process is performed on the transfer read to the collective account corresponding to the specified account, and a process similar to a transferring process from the specified account to the collective account is performed (S1104). At this time, the transfer information about the specified account together with the account number (transferred-to number) of the specified account is transferred to the collective account. This process is completely performed on each of the transfer to the specified account (S1106). When the process is performed (S1108 and S1110) on all specified accounts (for example, the accounts in the list) to be processed, the transferred funds and transfer information are collected in the collective account. The above described process is performed on the activation condition specified for each collective account (for example, at a predetermined time, once a day when a transfer receipt time is reached, etc.).

Thus, the process is performed, and a normal account is provided corresponding to a payer, thereby collectively managing transferred funds and transfer information in a collective account of a receiver.

### (Embodiment 6)

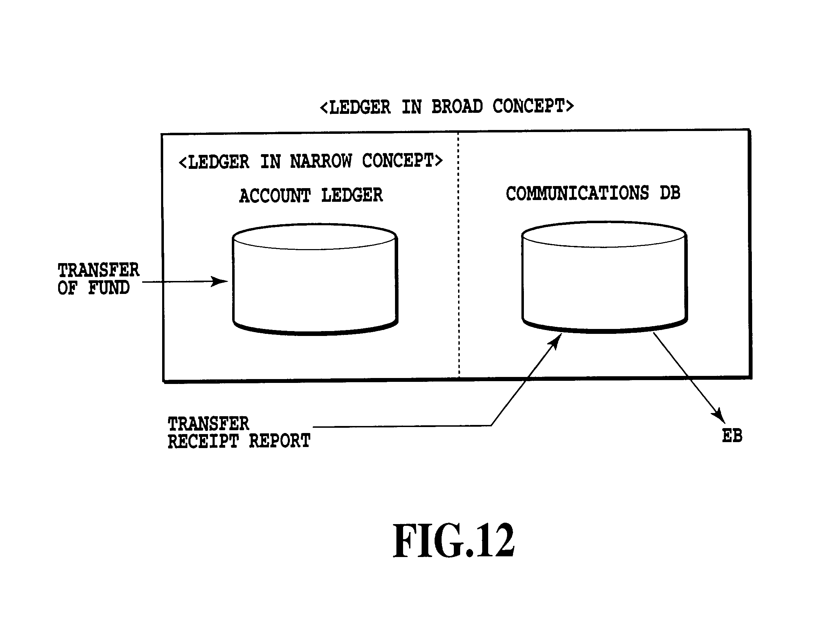

In the sixth embodiment described by referring to Figs. 12, 13, and 14, a process for collecting funds and a process for collecting transfer information are separately performed. In this case, as in the fifth embodiment, money can be normally transferred into accounts corresponding to payers.

The process in the sixth embodiment is based on the file configuration of the ledger file (account information file) as described below by referring to Fig. 12. In Fig. 12, the ledger file comprises two files. One is a simple ledger file, and a process should be performed on this file when a fund is transferred using a normal accounting ledger. Another file is a communications DB (database) file for accumulating only information about a transfer receipt report, etc. For example, when there was an inquiry about a receipt report, an inquiry is issued to this communications DB file. In addition, an electronic banking (EB) process can also be performed after obtaining information from the file.

Based on the file configuration shown in Fig. 12, the collecting process according to the sixth embodiment shown in Fig. 13 is described below.

In the process shown in Fig. 13, a fund can be transferred from a specified account to a collective account among the accounts in, for example, a cash transfer service not shown in the attached drawings. This process is performed on conditions specified for each specified account, etc. (condition that a fund can be transferred as a predetermined amount, a predetermined balance, a total amount, etc., that a fund can be transferred once a day, etc.). The process shown in Fig. 13 is performed to collect transfer information.

In Fig. 13, the transfer information about the specified account is all read (S1302), the specified account number is set as abridgment information (S1304), and then it is stored in the collective account for communications DB of the receiver (S1306). This process is performed on the specified accounts corresponding to all collective accounts (S1308, S1310). The process shown in Fig. 13 is performed under the activation conditions (for example, every predetermined time, once a day after the transfer reception time, etc.) specified for each collective account.

When an inquiry about transfer information is issued to a collective account after the completion of the process shown in Fig. 13, it is answered after preparing a reply according to the information from the communications DB. Accordingly, the response to the transfer from the communications DB can be obtained with a transferred-to account number (specified account number) for each payer added.

Thus, the process for transferring a fund and the process for transfer information can be separately performed.

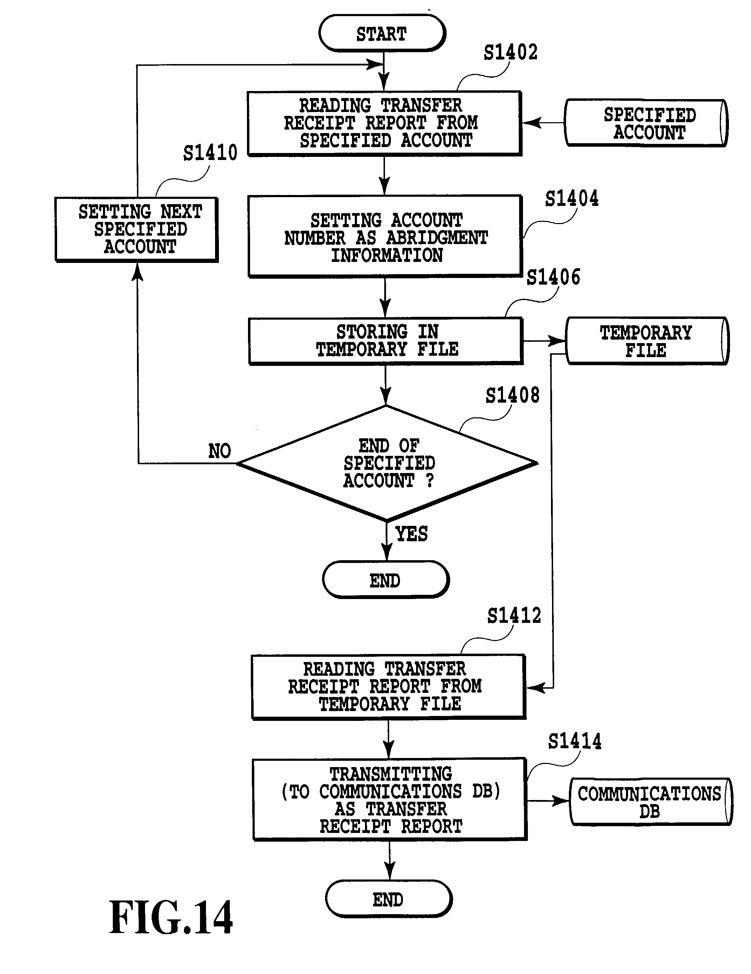

In the process shown in Fig. 13, a process for updating the communications DB performed according to the transfer information collected for each collective account can be collectively performed in a batch process using a temporary file. This process is shown in Fig. 14.

In Fig. 14, as in the process shown in Fig. 13, the transfer information about the specified account corresponding to each collective account is collected in a temporary file (S1402 through S1410). The explanation of the process is omitted here because it is similar to the process shown in Fig. 13.

The read transfer information for each collective account is stored together with the account number of each specified account in a temporary file. Then, the process for updating a communications DB is performed according to the information accumulated in the temporary file (S1412, S1414).

In the processes according to the fifth and sixth embodiments of the present invention, an account number is defined as additional information. However, account related information can also be additional information as in the above described first through fourth embodiments.

In the above described first through sixth embodiments, a related account and a collective account are provided in the same branch office to specify an account only by an account number. However, it is not necessary to always provide a related account and a collective account in the same branch office. That is, they can be provided in different branch offices. In this case, a number specifying an account comprises an account number and a branch number.

In addition, a related account does not have to one-to-one correspond to a payer, but a plurality of accounts can be associated with one payer. With the above described correspondence, transfer information can be collected for each payment object of a payer.

When there are a very large number of payers, the payers are divided into a plurality of groups, and a related account can correspond one-to-one to a group. With the correspondence, the function of specifying a payer can be lowered, but there can be a smaller number of accounts to be prepared.

## Claims

1. A transfer system in a bank system for transferring money using a plurality of related accounts to payers, characterized by comprising:
a unit for performing a receiving process on a specified account to collectively receive money transferred into a plurality of related accounts;
an output unit for outputting transfer information for the related account by adding to it account related information about an account related to a payer and/or a number specifying the related account; and
a unit storing the outputted transfer information as the transfer information about the specified account.

2. The transfer system as claimed in claim 1, characterized in that said unit performing the receiving process for receiving money comprises:
a unit for detecting whether or not an account into which money has been transferred is a related account which is related to the payer;
a unit for associating, if it is detected that the account into which money has been transferred is the related account which is related to the payer, the related account with the specified account; and
a unit for performing the receiving process on the specified account.

3. The transfer system as claimed in claim 2, characterized in that said unit associating a related account with a specified account replaces a number of the related account with a number of the specified account.

4. The transfer system as claimed in claim 2, characterized in that
said specified account is a parent account of the related account.

5. The transfer system as claimed in claim 1, characterized in that the receiving process on the specified account can be performed without performing a receiving process on the related account.

6. The transfer system as claimed in claim 1, characterized in that the receiving process on the related account can be performed on the specified account after performing a receiving process.

7. The transfer system as claimed in claim 1, characterized in that the receiving process on the specified account can be collectively performed at least.

8. The transfer system as claimed in claim 1, characterized in that said unit for performing a process for receiving money on the specified account performs a process for receiving money on the specified account independently after completing the process for transferring money into the related account.

9. The transfer system as claimed in claim 8, characterized in that said unit for storing the transfer information as transfer information about the specified account stores the transfer information in a file only for use in managing information.

10. The transfer system as claimed in claim 9, characterized in that after performing a process for collecting transfer information into each of the specified accounts, said file can be updated according to collected transfer information.

11. A transfer method for use in a bank system for transferring money using a plurality of related accounts to payers, characterized by comprising the steps of:
performing a receiving process on a specified account to collectively receive money transferred into a plurality of related accounts;
outputting transfer information for the related account by adding to it account related information about an account related to a payer and/or a number specifying the related account; and
storing the outputted transfer information as the transfer information about the specified account.

12. The transfer method as claimed in claim 11, characterized in that said step for performing the receiving process for receiving money comprises the steps of:
detecting whether or not an account into which money has been transferred is a related account which is related to the payer;
associating, if it is detected that the account into which money has been transferred is the related account which is related to the payer, the related account with the specified account; and
performing the receiving process on the specified account.

13. The transfer method as claimed in claim 12, characterized in that said step for associating the related account with the specified account replaces a number of the related account with a number of the specified account.

14. The transfer method as claimed in claim 12, characterized in that said specified account is a parent account.

15. The transfer method as claimed in claim 11, characterized in that the receiving process on the specified account can be performed without performing the receiving process on the related account.

16. The transfer method as claimed in claim 11, characterized in that the receiving process on the specified account can be performed after performing the receiving process on the related account.

17. The transfer method as claimed in claim 11, characterized in that the receiving processes on the specified account can be collectively performed at least.

18. The transfer method as claimed in claim 11, characterized in that said step for performing the process for receiving money on the specified account performs the process for receiving money on the specified account independently after completing the process for transferring money into the related account.

19. The transfer method as claimed in claim 18, characterized in that said step for storing the transfer information as transfer information about the specified account stores the transfer information in a file only for use in managing information.

20. The transfer method as claimed in claim 19, characterized in that after performing the process for collecting transfer information into each of the specified accounts, said file can be updated according to collected transfer information.

21. A recording medium for storing a program for transferring money using a plurality of related accounts to payers in a bank system, the program characterized in comprising steps of:
performing a receiving process on a specified account to collectively receive money transferred into a plurality of related accounts;
outputting transfer information for the related account by adding to it account related information about an account related to a payer and/or a number specifying the related account; and
storing the outputted transfer information as the transfer information about the specified account.

22. The recording medium as claimed in claim 21, characterized in that said step for performing the receiving process for receiving money comprises the steps of:
detecting whether or not an account into which money has been transferred is a related account which is related to the payer:
associating, if it is detected that the account into which money has been transferred is the related account which is related to the payer, the related account with the specified account; and
performing the receiving process on the specified account.

23. The recording medium as claimed in claim 22, characterized in that said step for associating the related account with the specified account replaces a number of the related account with a number of the specified account.

24. The recording medium as claimed in claim 22, characterized in that said specified account is a parent account.

25. The recording medium as claimed in claim 21, characterized in that the receiving process on the specified account can be performed without performing the receiving process on the related account in said program.

26. The recording medium as claimed in claim 21, characterized in that the receiving process on the specified account can be performed after performing a receiving process on the related account in said program.

27. The recording medium as claimed in claim 21, characterized in that
said receiving processes can be collectively performed at least on the specified accounts in said program.

28. The recording medium as claimed in claim 21, characterized in that said step for performing the process for receiving money on the specified account performs a process for receiving money on the specified account independently after completing the process for transferring money into the related account.

29. The recording medium as claimed in claim 28, characterized in that said step for storing the transfer information as transfer information about the specified account stores the transfer information in a file only for use in managing information.

30. The recording medium as claimed in claim 29, characterized in that after performing the process for collecting transfer information into each of the specified accounts, said file can be updated according to collected transfer information.
